# EUROPÄISCHE PATENTSCHRIFT

(11) **EP 3 287 316 B1**
(45) Veröffentlichungstag und Bekanntmachung des Hinweises auf die Patenterteilung: **30.09.2020**
(21) Anmeldenummer: 17187882.0
(22) Anmeldetag: 25.08.2017
(51) Int. Cl.: B60P 3/42

(54) **ADAPTER ZUM UMRÜSTEN EINES MULDERKIPPERS UND MULDENKIPPER**
ADAPTER FOR TRANSFORMING A DUMP TRUCK AND DUMP TRUCK
ADAPTATEUR PERMETTANT L'ADAPTATION D'UN TOMBEREAU ET TOMBEREAU

(30) Priorität: 26.08.2016 DE 102016115896
(43) Veröffentlichungstag der Anmeldung: 28.02.2018
(73) Patentinhaber: Huesker Synthetic GmbH, 48712 Gescher (DE)
(72) Erfinder: Hüning, Ulrich, 48712 Gescher (DE); Giesing, Marvin, 46395 Bocholt (DE)
(74) Vertreter: Tarvenkorn, Oliver

(56) Entgegenhaltungen:
- EP-A2- 2 993 081
- DE-B- 1 275 883
- JP-U- S5 950 849
- US-A- 3 025 073
- US-A- 4 161 263

## Beschreibung

Die Erfindung betrifft einen Adapter zum Umrüsten eines Fahrzeugs zum Transport von Schüttgut in einen Transporter für Flüssigkeiten mit den Merkmalen des Oberbegriffs des Anspruchs 1.

Das Transportfahrzeug kann ein landwirtschaftlicher Muldenkipper sein. Grundsätzlich eignet sich aber auch eine Vielzahl anderer Fahrzeuge mit Transporträumen für die Realisierung der Erfindung. Die Erfindung betrifft ferner einen Muldenkipper zum Transport von Flüssigkeiten.

Muldenkipper werden zum Transportieren von losen Schuttgütern verwendet. Dabei kommen Muldenkipper häufig in der Landwirtschaft während der Erntezeit zum Einsatz, um darin beispielsweise Getreide zu transportieren. Statistiken haben ergeben, dass landwirtschaftlich genutzte Muldenkipper oft nur während der Erntezeit benutzt werden und die meiste Zeit ungenutzt in der Scheune stehen. Ein Muldenkipper weist eine Mulde auf, die den Transportbereich zur Aufnahme von Schüttgut bildet, wobei die Mulde angehoben bzw. gekippt werden kann. Bei einem landwirtschaftlich genutzten Muldenkipper hat die Mulde meist eine quaderförmige Kontur und ist am hinteren Ende mit einer verschwenkbaren Klappe verschlossen, durch die das Schüttgut ausgekippt werden kann.

Aus DE 203 07 287 U1 ist ein Transportbehälter bekannt, beispielsweise für einen LKW, sowie eine Entladevorrichtung dafür. Der Transportbehälter kann wahlweise zum Transportieren von Stückgut oder Schüttgut verwendet werden. Dazu weist der Transportbehälter feste Wandungen auf und Halterungen zum Einhängen eines flexiblen Innenbehälters. In dem flexiblen Innenbehälter können Schüttgüter transportiert werden. Die Halterungen können von Schienen aufgenommen werden, so dass bei einem Stückguttransport der flexible Innenbehälter nicht demontiert werden muss, sondern zusammengeschoben werden kann.

Aus DE 10 2014 012 856 A1 ist ein Transportfahrzeug mit zumindest einem Laderaum zur Aufnahme von trockenen Gütern, insbesondere Massengütern wie Getreide bekannt, wobei in dem Laderaum ein flexibles größenvariables Behältnis zur Befüllung mit Flüssigkeit insbesondere Gülle angeordnet ist. Das Behältnis soll im oberen Bereich des Laderaums angeordnet sein und dort auf einer über ein Schienensystem längsbeweglichen Trommel gehalten und mittels der Trommel auf- und abrollbar sein. Das Behältnis soll in einem über eine Schottplatte abgegrenzten, größenvariablen Abteil des Laderaums angeordnet sein.

Bei einem Transportfahrzeug, das in EP 2 993 081 A2 beschrieben ist, kann ein flexibler Behälter in den Laderaum gelegt werden, das von einer Wickelwelle abwickelbar ist. Diese ist auf Schienen im oberen Bereich der Mulde gelagert. Bei Nichtgebrauch wird der aufgerollte Behälter in einem Aufnahmeraum im vorderen Muldenbereich gelagert. Dadurch ist er zwar jederzeit am Fahrzeug vorhanden und kann bedarfsweise spontan genutzt werden. Allerdings steht bei Schüttguttransport ständig nur ein reduzierter Transportraum in der Mulde zur Verfügung. Das Dokument stellt den nächstliegenden Stand der Technik dar und offenbart den Oberbegriff des Anspruchs 1.

Die JP S59 50849 U offenbart ein Muldenkipper-Fahrzeug, bei dem die Heckklappe gegen eine Adaptereinheit austauschbar ist, die einen aufwickelbaren, flexiblen Behälter enthält, der allerdings nicht für Flüssigkeiten vorgesehen ist, sondern für Mehl und andere pulverförmige Stoffe.

Aufgabe der Erfindung ist es, Zubehör für ein Fahrzeug, insbesondere einen Muldenkipper, zur Verfügung zu stellen, um das Umrüsten des Fahrzeugs in ein Fahrzeug zum Transport von Flüssigkeit in einfacher und schneller Weise zu ermöglichen.

Diese Aufgabe wird erfindungsgemäß durch einen Adapter zum Umrüsten eines Fahrzeugs, z.B. Muldenkippers, gemäß Patentanspruch 1 gelöst.

Der Adapter umfasst unter anderem Befestigungsmittel zur Befestigung des Adapters im Bereich einer Hecköffnung des Fahrzeugs, eine an dem Adapter angeordnete Flüssigkeitspumpe und einen mit einem Auslass der Flüssigkeitspumpe verbundenen flexiblen Behälter zur Aufnahme von gepumpter Flüssigkeit.

Durch den Auslass der Flüssigkeitspumpe wird beim Befüllen in den flexiblen Behälter Flüssigkeit gefördert. Bei umgekehrter Förderung der Flüssigkeitspumpe wird durch den Auslass Flüssigkeit aus dem flexiblen Behälter abgesaugt und einem außerhalb des Fahrzeugs befindlichen Befüll- und Entleerungsrohr zugeführt, durch das die Flüssigkeit ausströmt.

Zum Umrüsten des Fahrzeugs und insbesondere eines Muldenkippers muss einfach die Heckklappe entfernt werden, die in der Regel am hinteren Ende der Mulde festgeschraubt ist. Anstelle der Heckklappe wird der Adapter mit dem Rahmen verschraubt, wobei der flexible Behälter beim Befüllen auf dem Boden der Mulde aufliegt. Der Rahmen weist in der Praxis die Maße in Fahrzeugquerrichtung und in Fahrzeughochrichtung einer Hecköffnung eines Muldenkippers auf. Die Tiefe in Fahrzeuglängsrichtung des Rahmens ist wesentlich kleiner als die Erstreckung in die anderen Dimensionen. Die Richtungsangaben in Verbindung mit dem Adapter beziehen sich auf die Richtungen in Einbaulage eines Adapters im Bereich der Hecköffnung des Muldenkippers. Unter einem flexiblen Behälter wird vorliegend ein flüssigkeitsdichter, sackartiger Behälter zur Aufnahme von Flüssigkeiten verstanden, der in der Mulde aufgenommen ist. Der Behälter trennt die Flüssigkeiten von der Mulde und verhindert eine Verunreinigung der Mulde mit eingefüllten Flüssigkeiten. Insbesondere kann der flexible Behälter von einem hochfesten Gewebe gebildet werden, das an seiner Innenseite eine gummiartige Beschichtung aufweist. In dem flexiblen Behälter können beliebige Flüssigkeiten aufgenommen werden. Bei der landwirtschaftlichen Nutzung des Muldenkippers sind derartige Flüssigkeiten beispielsweise Gülle, Wasser oder Futtermittel. Wenn der Muldenkipper zum Transport verschiedener Flüssigkeiten verwendet werden soll, kann der flexible Behälter austauschbar an dem Rahmen angeordnet sein. Es ist auch möglich die Pumpe und alle flüssigkeitsführenden Leitungen austauschbar am Rahmen anzuordnen, um den Adapter beispielsweise nach einem Einsatz zum Transport von Gülle für den Transport einer trinkbaren Flüssigkeit umzurüsten.

Der flexible Behälter nimmt im ungefüllten Zustand wenig Volumen ein und kann gerollt, geknickt oder zusammengefaltet werden, um möglichst platzsparend verstaut zu werden. Bei einem vollständig gefüllten flexiblen Behälter kann das gesamte Transportvolumen der Mulde des Muldenkippers ausgefüllt sein. Mittels der Flüssigkeitspumpe, die an dem Rahmen befestigt ist, kann Flüssigkeit in den flexiblen Behälter hinein oder aus dem flexiblen Behälter heraus gepumpt werden.

Der Adapter weist einen Aufnahmeraum für die Aufnahme des flexiblen Behälters aufweisen. Bei der Montage des Adapters wird dann gleichzeitig der in dem Aufnahmeraum angeordnete flexible Behälter an dem Fahrzeug befestigt. Der flexible Behälter wird erst beim Befüllen aus dem Aufnahmeraum des Adapters in die Mulde des Fahrzeuges eingelegt. Nach dem Entleeren des Behälters kann dieser wieder in dem Aufnahmeraum des Adapters verstaut werden. Auf diese Weise kann auch bei montiertem Adapter mit dem Fahrzeug Schüttgut anstelle von Flüssigkeit transportiert werden.

Der Aufnahmeraum besitzt eine Wickelvorrichtung zum Aufwickeln des Behälters. Die Wickelvorrichtung wird beispielsweise von einer Wickelwelle gebildet, die im oberen Bereich des Aufnahmeraums angeordnet ist.

Ein festes Ende des flexiblen Behälters ist an dem Auslass der Flüssigkeitspumpe befestigt, wobei ein bewegliches Ende des flexiblen Behälters an einem Zugelement befestigt ist, welches durch die Wickelvorrichtung aufwickelbar ist.

Das Zugelement kann beispielsweise mindestens ein flexibles Band sein oder mehrere flexible Bänder, die über die Breite des Behälters verteilt sind und das bewegliche Ende des Behälters mit der Wickelvorrichtung verbinden. Das Zugelement kann auch eine flexible Bahn, z.B. aus textilem Material sein, die sich über die gesamte Breite des Behälters sowie der Wickelvorrichtung erstreckt.

Wenn der Behälter leer ist, ist er vollständig auf der Wickelvorrichtung im oberen Bereich des Adapters aufgewickelt, wobei sein festes Ende fest mit dem Auslass der Flüssigkeitspumpe im unteren Bereich des Adapters verbunden ist. Beim Befüllen des flexiblen Behälters mit Flüssigkeit wird der Behälter von der Wickelvorrichtung abgewickelt, während er sich befüllt. Anschließend wird das Zugelement von der Wickelvorrichtung abgewickelt. Wenn der Behälter vollständig in der Mulde liegt, erstreckt sich das Zugelement zwischen der Wickelvorrichtung und dem freien Ende des Behälters, welches am gegenüberliegenden Ende der Mulde liegt. Wenn der Behälter durch Umkehren der Förderrichtung der Flüssigkeitspumpe wieder entleert wird, werden zunächst das Zugelement und anschließend das bewegliche Ende des Behälters auf die Wickelvorrichtung aufgewickelt. Beim Aufwickeln des Behälters auf die Wickelvorrichtung wird das Volumen des Behälters reduziert und daher die Flüssigkeit aus dem Inneren des Behälters herausgedrückt wird. Der vollständig entleerte Behälter befindet sich dann wieder im Wesentlichen in dem Aufnahmeraum, so dass mit dem Fahrzeug anstelle einer Flüssigkeit Schüttgut transportiert werden kann. Wenn der Adapter verschwenkbar an der Mulde befestigt ist, stört er nicht beim Entleeren des in der Mulde befindlichen Schüttguts.

Der Adapter kann einen Rahmen aufweisen, an dem die Befestigungsmittel und die Flüssigkeitspumpe befestigt sind.

Der erfindungsgemäße Adapter mit dem hier beschriebenen Rahmen, kann auf einfache Weise an einem bestehenden Muldenkipper montiert werden. Insbesondere müssen keine komplizierten mechanischen Systeme unter anderem mit beweglichen Teilen verbaut werden. Ein Nachrüsten des Muldenkippers mit etwaigen Aufhängungen oder Schienen ist nicht notwendig. Die bedarfsweise Umrüstung des Muldenkippers durch einfaches Entfernen der Heckklappe und anschließende Montage des Adapters kann mit geringem Personalaufwand und in kurzer Zeit erfolgen. Insbesondere durch die Anordnung der Pumpe und der Pumpensteuerung an dem Rahmen liegt der Adapter mit allen notwendigen Bauteilen als Einheit vor und kann von einer Person oder zwei Personen in einem Zeitraum von höchstens 60 bis 120 Min., in praktischen Versuchen aber auch deutlich schneller, montiert werden.

Die Befestigung des erfindungsgemäßen Adapters im Bereich der Hecköffnung erfolgt durch Verwendung der Befestigungsmittel für die Heckklappe des Muldenkippers. Seitlich an dem Rahmen des Adapters können als Befestigungsmittel Schraubbohrungen ausgebildet sein, die korrespondierend zu Schraubbohrungen in Flanschblechen im Bereich einer Hecköffnung der Mulde des Muldenkippers ausgebildet sind. Solche Flanschbleche tragen an landwirtschaftlichen Muldenkippern die Heckklappe. Durch jeweils fluchtende Schraubbohrungen des Rahmens und der Flanschbleche kann eine Schraube geführt werden. Eine solche Befestigung kann mit Standardteilen und in einfacher Art und Weise von einem Nutzer durchgeführt werden. Sie ist stabil und gleichzeitig leicht wieder zu lösen.

Der Adapter kann um eine im oberen Bereich der Hecköffnung quer verlaufende Schwenkachse schwenkbar befestigt sein. Die Heckklappen der Mulden sind bei Muldenkippern häufig schwenkbar befestigt, so dass der Adapter bei der Befestigung an dem Schwenkrahmen für die Heckklappen ebenfalls verschwenkbar ist. Insbesondere können die Befestigungsmittel seitliche Schwenkarme umfassen, die an dem Fahrzeug befestigt sind.

Der Aufnahmeraum kann mit einer beweglichen Trennwand verschließbar sein. Durch ein verschwenkbares oder verschiebbares Wandelement kann der Aufnahmeraum mit dem darin aufgenommenen flexiblen Behälter gegenüber der Mulde des Muldenkippers verschlossen werden. In der Praxis kann an dem Adapter bzw. an dessen Rahmen mindestens ein Tragarm zur Abstützung eines mit der Pumpe verbundenen Befüll- und Entleerungsrohrs angeordnet. Der Tragarm stützt das Befüll- und Entleerungsrohr während des Transportes, aber auch während des Befüll- bzw. Entleerungsvorgangs. Bevorzugt ragen die Tragarme in Fahrzeuglängsrichtung gesehen nach hinten über eine Hecköffnung hinaus und in Fahrzeughochrichtung gesehen unter eine Hecköffnung, so dass das freie Ende des Befüll- und Entleerungsrohres außerhalb eines Transportraumes eines Muldenkippers in Bodennähe angeordnet ist. Auf diese Weise ist das Befüll- und Entleerungsrohr auf einfache Weise mit einem externen Rohranschluss verbindbar und die Flüssigkeit kann ohne Leckage in den Behälter hinein oder aus dem Behälter heraus gepumpt werden. In der Praxis können zwei Tragarme mit Befüll- und Entleerungsrohren vorgesehen sein, die sich von der Fahrzeugmitte aus einmal nach links und einmal nach rechts erstrecken. Auf diese Weise ist die Befüllung bzw. Entleerung von beiden Seiten des Fahrzeuges möglich. Alternativ kann ein Befüll- und Entleerungsrohr in der Mitte angeordnet sein, welches in verschiedene Positionen schwenkbar ist und daher die Befüllung und Entleerung von beiden Seiten ermöglicht.

Zwischen dem Befüll- und Entleerungsrohr und der Pumpe kann ein Fremdkörperschutz eingebaut sein, um zu verhindern, dass Steine oder grobes Fasermaterial die Pumpe beschädigen oder in den flexiblen Behälter gelangen. Ein Fremdkörperschutz kann Grob- und Faserstoffe zerkleinern und Fremdkörper wie Steine aus der zu pumpenden Flüssigkeit abscheiden. Als Fremdkörperschutz kann zum Beispiel das unter der eingetragenen Marke "Rota-Cut" vertriebene Produkt der Hugo Vogelsang Maschinenbau GmbH verwendet werden.

Um eine exzessive Befüllung des flexiblen Behälters mit Flüssigkeit zu vermeiden, kann ein Überlaufrohr vorgesehen sein, welches mit dem Innenraum des flexiblen Behälters gekoppelt ist und welches zu einem Überlaufbehälter führt. Wenn der flexible Behälter vollständig mit Flüssigkeit gefüllt ist, gelangt die eingepumpte überschüssige Flüssigkeit durch das Überlaufrohr in einen Überlaufbehälter. Der Überlaufbehälter ist vorzugsweise zumindest teilweise lichtdurchlässig ausgebildet, so dass von außen erkennbar ist, wenn sich in dem Überlaufbehälter Flüssigkeit sammelt. Ein Überlaufbehälter ist insbesondere dann wichtig, wenn ein Drucksensor, der zur Kontrolle des Füllstandes des flexiblen Behälters vorgesehen ist, defekt ist und eine durch den Drucksensor ausgelöste Abschaltung des Pumpvorgangs nicht funktioniert.

Insbesondere kann das Überlaufrohr über ein Überdruckventil mit dem Innenraum des flexiblen Behälters gekoppelt sein. Damit wird sichergestellt, dass erst wenn der flexible Behälter vollständig gefüllt ist und dort ein Überdruck herrscht, die überschüssige Flüssigkeit über das Überlaufrohr in den Überlaufbehälter geführt wird.

Weiter kann ein Entlüftungsrohr mit dem Innenraum des Überlaufbehälters gekoppelt sein. Durch das Entlüftungsrohr wird sichergestellt, dass während der Befüllung Gase aus dem flexiblen Behälter und dem Überlaufbehälter entweichen können. Das Entlüftungsrohr stellt ferner sicher, dass bei einem weiteren Betrieb der Pumpe selbst nach der Befüllung des Überlaufbehälters die zugeführte Flüssigkeit in die Umgebung entweichen kann und nicht den flexiblen Behälter oder den Überlaufbehälter beschädigt. Das Entlüftungsrohr und das Überlaufrohr können mit einem Rückschlagventil versehen sein, so dass Gase oder Flüssigkeiten zwar aus dem flexiblen Behälter hinaus geleitet werden aber nicht in den flexiblen Behälter einströmen und diesen verschmutzen können.

In einer praktischen Ausführungsform ist an dem Rahmen eine Steuerung für die Flüssigkeitspumpe befestigt. Über die Steuerung kann die Pumpe derart betrieben werden, dass sie entweder Flüssigkeit in den flexiblen Behälter pumpt, oder den flexiblen Behälter entleert. Durch eine Anordnung der Pumpe mit ihrer Steuerung am Rahmen wird die kompakte Ausbildung des Adapters mit allen notwendigen Bauteilen weiter verbessert und die Umrüstzeit reduziert. Die Pumpe kann mit einer Hydraulikflüssigkeit der Zugmaschine, üblicherweise ein Traktor oder ein sonstiges Zugfahrzeug, angetrieben werden. Die Drehrichtung der Pumpe wird durch Invertieren der Strömungsrichtung der Hydraulikflüssigkeit geändert. Es kann aber auch eine zusätzliche Pumpe für Hydraulikflüssigkeit an dem Rahmen befestigt sein, falls ein hydraulisches System einer Zugmaschine nicht verfügbar ist.

Um die Handhabung des Adapters zu erleichtern, kann der Rahmen lösbar mit einem Traggestell verbindbar sein, welches vorzugsweise mit Rädern ausgerüstet ist. Das Traggestell bietet dem Rahmen einen kippsicheren Stand und dient zur Lagerung des Rahmens, wenn dieser nicht im Einsatz ist. Ferner kann der Rahmen mit dem Traggestell in einfacher Weise bewegt werden, insbesondere gerollt werden. So kann der Rahmen mittels des Traggestells passgenau in die Hecköffnung eines Muldenkippers eingesetzt werden, um dort festgeschraubt zu werden. Das Traggestell kann zusätzlich eine mechanische oder hydraulische Hubvorrichtung aufweisen, um den Rahmen in Fahrzeughochrichtung auf der Höhe der Hecköffnung des Muldenkippers zu positionieren.

Vorzugsweise weist der Rahmen eine obere Querstrebe und eine untere Querstrebe auf, wobei zumindest an einer der Querstreben mindestens eine Haltestrebe befestigt ist, welche sich zumindest über einen Teil der Höhe des Rahmens erstreckt. Die Querstreben erstrecken sich in Fahrzeugquerrichtung und die mindestens eine Haltestrebe erstreckt sich in vertikaler Richtung. Die Haltestreben dienen zur Begrenzung der Ausdehnung des flexiblen Behälters nach hinten in Fahrzeuglängsrichtung, damit der flexible Behälter sich nicht über eine Hecköffnung hinaus nach hinten ausdehnt. Insbesondere können sich die Haltestreben über die gesamte Höhe des Rahmens erstrecken und auch über die gesamte Höhe, die der flexible Behälter maximal einnehmen kann. Die mindestens eine Haltestrebe kann ferner zur Stabilisierung des Rahmens dienen. Bevorzugt sind mehrere Haltestreben an den Querstreben angeordnet. Seitlich wird der Rahmen durch vertikale Streben begrenzt, die mit den seitlichen Bereichen der Mulde im Bereich der Hecköffnung verbunden werden.

Um das Innere des Muldenkippers zu schützen, kann der Rahmen eine Abdeckung aufweisen, welche zumindest einen größeren Teil der Hecköffnung des Muldenkippers verschließt. Die Abdeckung kann dabei aus textilem Material oder Kunststoff sein und das Innere des Muldenkippers gegenüber Staub und Schmutz und gegebenenfalls Feuchtigkeit schützen. Bevorzugt ist die Abdeckung derart angeordnet, dass sie bei an der Hecköffnung befestigtem Rahmen in Fahrzeuglängsrichtung hinter dem Rahmen angeordnet ist und den Rahmen mit den daran angeordneten Bauteilen zumindest teilweise bedeckt.

Die Erfindung betrifft auch einen Muldenkipper zum Transport von Flüssigkeiten, wobei an der Hecköffnung des Muldenkippers der vorstehend beschriebene Adapter befestigt ist.

Weitere praktische Ausführungsformen und Vorteile der Erfindung sind nachfolgend im Zusammenhang mit den Zeichnungen beschrieben. Es zeigen:
- Fig. 1: einen erfindungsgemäßen Adapter in einer perspektivischen Ansicht von schräg hinten rechts,
- Fig. 2: den Adapter aus Fig. 1 in einer Rückansicht,
- Fig. 3: den Adapter aus Fig. 1 in einer perspektivischen Ansicht von hinten links,
- Fig. 4: den Adapter aus Fig. 1 in einer Seitenansicht,
- Fig. 5: einen Ausschnitt der Mulde eines Muldenkippers mit einer Hecköffnung mit einem daran befestigten Adapter aus Fig. 1 in einer perspektivischen Ansicht von hinten rechts,
- Fig. 6: die Anordnung aus Fig. 5 in einer Rückansicht,
- Fig. 7: die Anordnung aus Fig. 5 in einer perspektivischen Ansicht von hinten links,
- Fig. 8: eine schematische Darstellung eines Pumpensystems,
- Fig. 9: eine Rückansicht einer alternativen Ausführungsform des Adapters,
- Fig. 10: eine perspektivische Rückansicht des Adapters aus Fig. 9,
- Fig. 11: eine perspektivische Vorderansicht des Adapters aus Fig. 9,
- Fig. 12: eine perspektivische Rückansicht der Mulde eines Muldenkippers mit dem Adapter aus den Fig. 9 - 11,
- Fig. 13: eine perspektivische Rückansicht der Mulde aus Fig. 12 mit hochgeschwenktem Adapter,
- Fig. 14: eine perspektivische Seitenansicht der Mulde aus Fig. 12 mit weggeschnittener Seitenwand und heruntergeschwenkter Trennwand,
- Fig. 15: eine perspektivische Seitenansicht der Mulde aus Fig. 12 mit weggeschnittener Seitenwand und hochgeschwenkter Trennwand,
- Fig. 16: eine der Fig. 14 entsprechende Darstellung mit befülltem flexiblem Behälter.

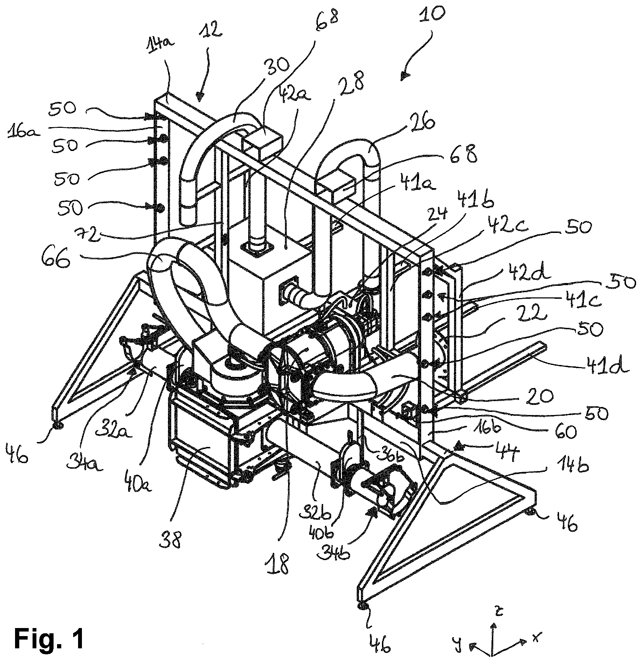

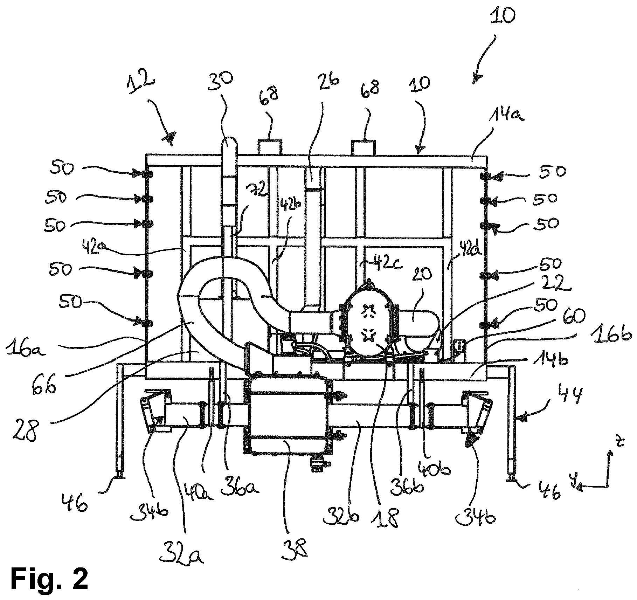

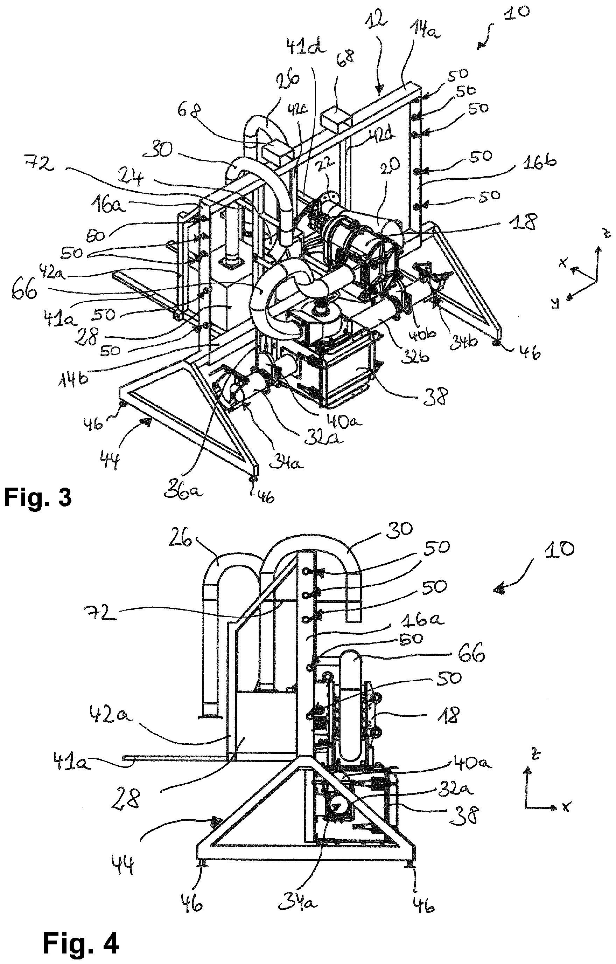

In den Figuren 1 bis 4 ist ein erfindungsgemäßer Adapter 10 dargestellt. Der Adapter 10 umfasst einen im Wesentlichen rechteckigen Rahmen 12 der sich überwiegend in Fahrzeughochrichtung (z-Richtung) und in Fahrzeugquerrichtung (y-Richtung) erstreckt. Es sei in diesem Zusammenhang nochmals darauf hingewiesen, dass sich die Richtungsangaben auf die Einbaulage des Adapters 10 an einem Muldenkipper beziehen. Die in dieser Beschreibung angegebenen x-, y- und z-Richtungen sind in den Zeichnungsfiguren eingezeichnet. Der Rahmen 12 ist durch zwei parallele Querstreben, eine obere Querstrebe 14a und eine untere Querstrebe 14b und durch zwei parallele vertikale Streben 16a, 16b gebildet.

An dem Rahmen 12 ist eine Flüssigkeitspumpe 18 befestigt, mit deren Auslass 20 ein flexibler Behälter zur Aufnahme von Flüssigkeit über einen Flansch 22 verbindbar ist. Rechts neben der Pumpe 18 ist eine Steuerung 24 für die Pumpe 18 angeordnet und an dem Rahmen 12 befestigt. Die Steuerung 24 kann über ein Bedienelement 60 von einem Fahrer des Fahrzeuges geschaltet werden, welches den Muldenkipper schleppt.

Ferner ist mit dem Innenraum des flexiblen Behälters ein Überlaufrohr 26 verbindbar, welches zu einem Überlaufbehälter 28 führt. Der Überlaufbehälter 28 ist vorliegend aus transparentem oder transluzentem Material, insbesondere aus lichtdurchlässigem Kunststoff gebildet. Sobald Flüssigkeit in den Überlaufbehälter 28 einströmt, wird dies von außen sichtbar. Aus dem Überlaufbehälter 28 führt ein Entlüftungsrohr 30 heraus, welches sich vertikal und in Fahrzeuglängsrichtung (x-Richtung) nach hinten über den Rahmen 12 hinaus erstreckt. Das Entlüftungsrohr 30 wird von einer kreuzförmigen Stützstrebe 72 an dem Rahmen 12 abgestützt. Falls die Pumpe 18 trotz vollständiger Füllung des flexiblen Behälters und des Überlaufbehälters 28 weiter Flüssigkeit fördert, kann diese aus dem Entlüftungsrohr 30 austreten, ohne dass ein unzulässig hoher Flüssigkeitsdruck entsteht.

An der Pumpe 18 ist zudem ein linkes Befüll- und Entleerungsrohr 32a und ein rechtes Befüll- und Entleerungsrohr 32b angeordnet. Die Befüll- und Entleerungsrohre 32a, 32b erstrecken sich in Fahrzeuglängsrichtung (x-Richtung) nach hinten und nach unten. An die freien Enden 34a, 34b des linken und rechten Befüll- und Entleerungsrohrs 32a, 32b kann ein Schlauch (nicht dargestellt) angeschlossen werden, der mit einem zu leerenden oder zu befüllenden Flüssigkeitsreservoir verbunden ist. Das linke und rechte Befüll- und Entleerungsrohr 32a, 32b sind jeweils mittels eines Tragarms 36a, 36b abgestützt, der jeweils rechts bzw. links von der Pumpe 18 liegt. Mit dem linken und rechten Befüll- und Entleerungsrohr 32a, 32b kann eine Befüllung von beiden Seiten realisiert werden. In dem linken und rechten Befüll- und Entleerungsrohr 32 a, 32b ist ein jeweils ein Ventil 40a, 40b angeordnet.

Zwischen dem linken und rechten Befüll- und Entleerungsrohr 32a, 32b und der Pumpe 18 ist ein Fremdkörperschutz 38 angeordnet. Flüssigkeit, die mittels der Pumpe durch das linke und/oder das rechte Befüll- und Entleerungsrohr 32a, 32b in den flexiblen Behälter gepumpt wird, gelangt zunächst durch den Fremdkörperschutz 38, der verhindert das beispielsweise Steine oder grobe Fasern zur Pumpe 18 oder in den flexiblen Behälter gelangen und diese gegebenenfalls beschädigen. Der Fremdkörperschutz 38 ist über ein Zwischenrohr 66 mit der Pumpe 18 verbunden.

Von der unteren Querstrebe 14b aus erstrecken sich vier Auflagestreben 41a, 41b, 41c, 41d in Fahrzeuglängsrichtung (x-Richtung). Die Auflagestreben 41a, 41b, 41c, 41d sind dazu bestimmt, bei in der Hecköffnung der Mulde eingesetztem Rahmen 12 auf dem Boden der Mulde aufzuliegen. Von den Auflagestreben 41a, 41b, 41c, 41d erstrecken sich in vertikaler Richtung vier Haltestreben 42a, 42b, 42c, 42d nach oben. Die Haltestreben 42a, 42b, 42c, 42d dienen dazu, die Ausdehnung eines in der Mulde liegenden flexiblen Behälters in Fahrzeuglängsrichtung (x-Richtung) nach hinten zu begrenzen. An den vertikalen Abschnitt jeder der Haltestreben 42a, 42b, 42c, 42d schließt sich ein schräger Abschnitt an, dessen Ende mit der oberen Querstrebe 14a des Rahmens 12 verbunden ist.

Der Adapter 10 ermöglicht eine leichte und schnelle Umrüstung eines Muldenkippers in ein Fahrzeug für den Transport von Flüssigkeiten, weil an ihm alle für die Befüllung, Aufnahme und Entleerung der Flüssigkeit erforderlichen Anordnungen befestigt sind.

In den Figuren 1 bis 4 ist der Adapter 12 mit einem Traggestell 44 verbunden. Auf dem Traggestell 44 kann der Adapter 10 gelagert und transportiert werden, wenn er nicht im Einsatz ist. Alternativ zu den in der Zeichnung dargestellten Standfüßen 46 kann das Traggestell 44 auch Rollen aufweisen um einen erfindungsgemäßen Adapter 10 in einfacher Weise, zum Beispiel hin zu einem Muldenkipper zu bewegen. Zusätzlich sind an der oberen Querstrebe 14a zwei ösenförmige Stapleraufnahmen 68 angeordnet, mit denen der Adapter 10 mittels einer Gabel-Ladevorrichtung eines Gabelstapler oder eines Traktors angehoben und transportiert werden kann.

Die vertikalen Streben 16a, 16b des Rahmens 12 weisen Befestigungsmittel auf, mit denen der Adapter 10 im Bereich einer Hecköffnung der Mulde eines Muldenkippers befestigbar ist. Jede der vertikalen Streben 16a, 16b weist als Befestigungsmittel fünf Schraubbohrungen 50 auf, mit denen der Adapter 10 an der Hecköffnung 48 festgeschraubt wird.

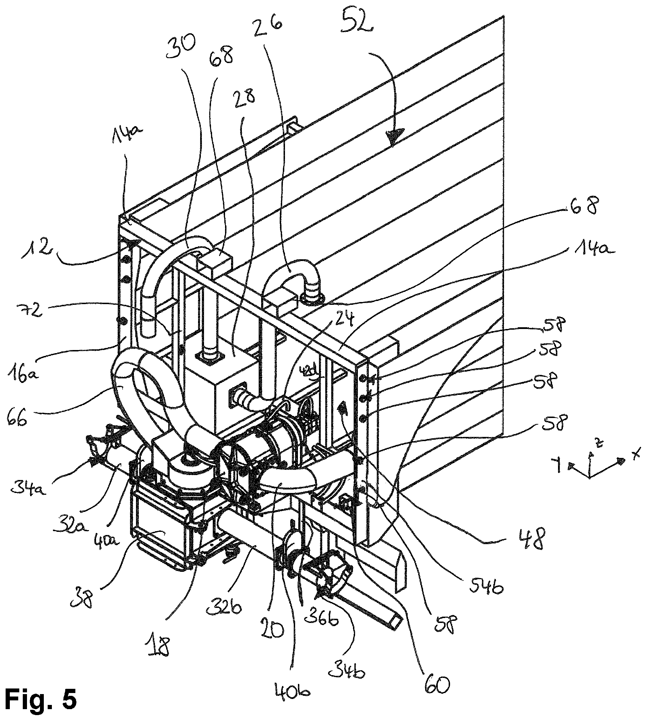

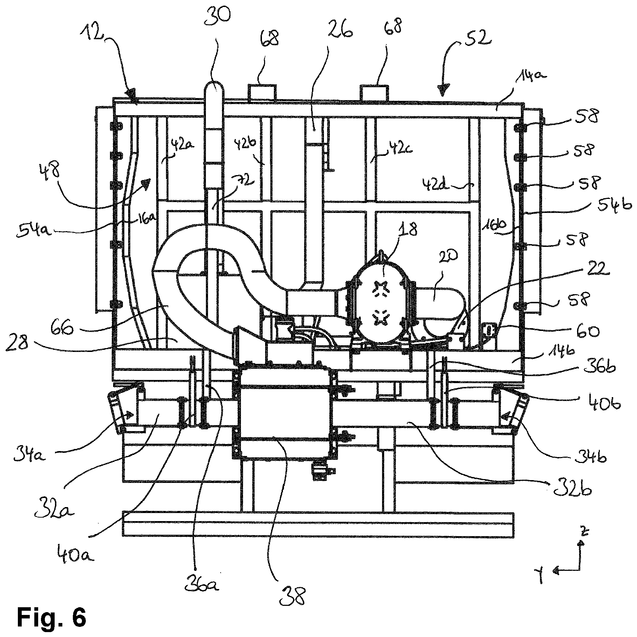

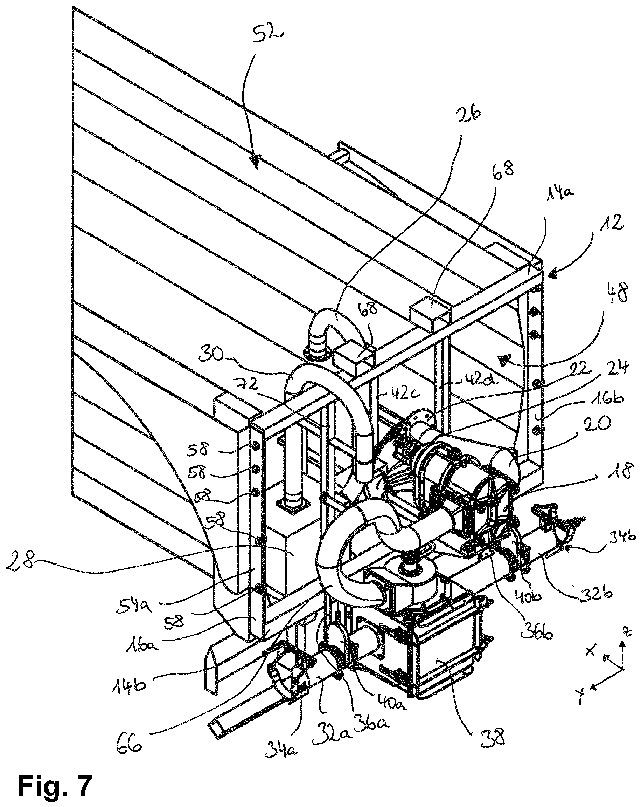

In den Figuren 5 bis 7 ist ein Ausschnitt der kastenförmigen Mulde 52 eines Muldenkippers dargestellt, der eine Hecköffnung 48 aufweist. Rechts und links der Hecköffnung 48 erstrecken sich in vertikaler Richtung (z-Richtung) Flanschbleche 54a, 54b, die ebenfalls fünf Schraubbohrungen aufweisen. Die Schraubbohrungen 50 in den vertikalen Streben 16a, 16b des Adapters 10 und die Schraubbohrungen in den Flanschblechen 54a, 54b sind derart angeordnet, dass sie in Einbaulage des Adapters 10 miteinander fluchten. Durch jeweils fluchtende Schraubbohrungen 50 einer vertikalen Strebe 16a, 16b und eines daran angrenzenden Flanschblechs 54a und 54b wird eine Schraube 58 gesteckt und mit einer Gewindemutter verschraubt.

Wie in den Fig. 5-7 zu sehen ist, erstrecken sich das linke und rechte Befüll- und Entleerungsrohr 32a, 32b, sowie die beiden Tragarme 36a, 36b in Fahrzeuglängsrichtung (x-Richtung) nach hinten über die Hecköffnung 48 des Muldenkippers hinaus. So können die freien Enden 34a, 34b des linken und rechten Befüll- und Entleerungsrohrs 32a, 32b an ein weiteres Rohr angeschlossen werden, um Flüssigkeit zu oder abzuführen. Der Rohranschluss liegt außerhalb, nämlich hinter der Mulde 52, so dass die Mulde 52 vor Verunreinigung geschützt ist. Der Fremdkörperschutz 38 ist auch außerhalb (hinter) der Mulde 52 angeordnet.

Das Entlüftungsrohr 30 erstreckt sich ebenfalls nach hinten über die Hecköffnung 48 hinaus, so dass auch etwaige Gase, die sich in dem flexiblen Behälter sammeln, oder austretende Flüssigkeit nach außen geführt werden und nicht in die Mulde 52 gelangen. Die übrigen Bauelemente, wie die Flüssigkeitspumpe 18, die Steuerung 24, das Überlaufrohr 26 und der Überlaufbehälter 28 sind in Fahrzeuglängsrichtung betrachtet zumindest überwiegend innerhalb der Mulde 52 angeordnet. Die Verbindung zwischen dem Fremdkörperschutz 38, der Pumpe 18 und dem flexiblen Behälter ist mit geeigneten Dichtungen abgedichtet.

Die Ausdehnung des flexiblen Behälters in Fahrzeuglängsrichtung (x-Richtung) nach hinten betrachtet wird, wie oben erwähnt, durch die Haltestreben 42a, 42b, 42c, 42d begrenzt, so dass der flexible Behälter in der Mulde 52 des Muldenkippers allseitig eingefasst ist.

Zusätzlich kann noch eine Abdeckung an dem Rahmen 12 angeordnet werden, die die Mulde 52 des Muldenkippers und die am Rahmen 12 angeordneten Elemente unter anderem vor Verschmutzung schützt.

Der flexible Behälter ist in den Figuren 1 bis 7 nicht dargestellt. Der flexible Behälter kann ein beliebiger flüssigkeitsdichter, sackartiger Behälter zur Aufnahme von Flüssigkeiten sein, wie oben erwähnt z.B. aus hochfestem Gewebe gebildet, das an seiner Innenseite eine gummiartige Beschichtung aufweist. In Verbindung mit dem Adapter können auch für den Transport unterschiedlicher Flüssigkeiten unterschiedliche flexible Behälter verwendet werden. So kann durch einfaches Reinigen der Pumpe und der flüssigkeitsführenden Bauteile des Adapters durch Anschluss eines anderen flexiblen Behälters auf eine andere Flüssigkeitsart umgestellt werden.

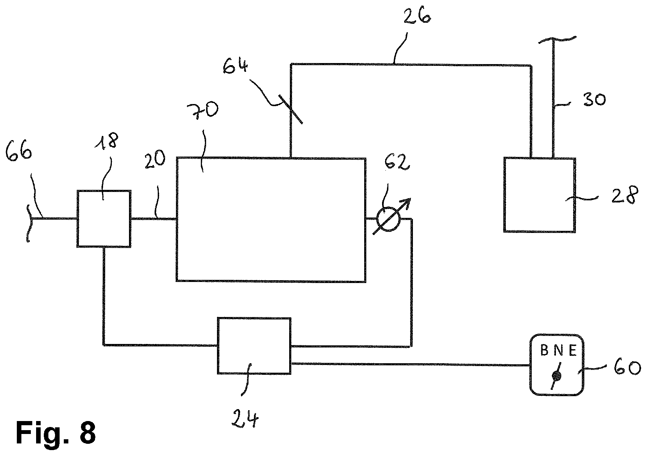

In Verbindung mit Fig. 8 wird im Folgenden das Flüssigkeitssystem näher erläutert.

Der Bediener kann manuell die Befüllung oder Entleerung des flexiblen Behälters 70 über eine Bedieneinrichtung 60, zum Beispiel einen Bedienschalter oder Bedienhebel, starten. Bei der Befüllung wird durch die Pumpe 18 Flüssigkeit von dem linken und/oder rechten Befüll- und Entleerungsrohr 32a, 32b über den Fremdkörperschutz 38 und das Zwischenrohr 66 und den Auslass 20 der Pumpe 18 in den flexiblen Behälter 70 gepumpt. Die Pumpe 18 wird vorzugsweise hydraulisch betrieben. Hierzu eignet sich ein hydraulisches System der Zugmaschine (nicht dargestellt) des Muldenkippers. Mittels der Steuerung 24 kann die Laufrichtung der Pumpe 18 eingestellt werden. Während der Befüllung wird der flexible Behälter 70 soweit mit Flüssigkeit befüllt, bis von einem Drucksensor 62 der maximal zulässige Flüssigkeitsstand detektiert wird. Die Pumpe 18 kann dann aufgrund des Signals des Drucksensors 62 automatisch auf Leerlauf gestellt werden. Für den Fall eines defekten Drucksensors 62, ist der flexible Behälter 70 über ein Überdruckventil 64 mit dem Überlaufrohr 26 verbunden, welches in einen Überlaufbehälter 28 führt. Aus dem Überdruckbehälter 28 führt dann das Entlüftungsrohr 30 heraus, welches ein Ausströmen von Flüssigkeit aus dem Überlaufbehälter 28 ermöglicht, wenn dieser voll ist.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

Insbesondere die Anordnung und Befestigung der Pumpe 18, der Steuerung 24, des Überlaufrohrs 26, des Überlaufbehälter 28, des Fremdkörperschutzes 38 und des Entlüftungsrohrs 30 kann an verschiedenen Orten und mittels beliebiger Befestigungstechniken (Schrauben, Nieten, Schweißen) an dem Rahmen 12 erfolgen.

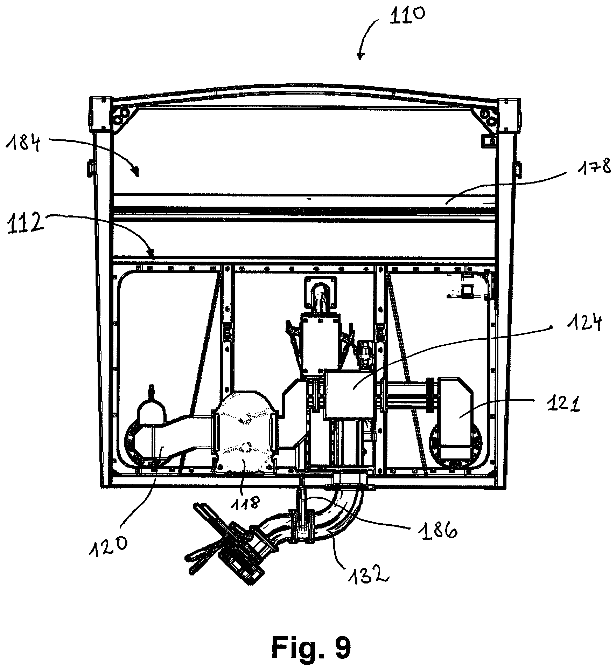

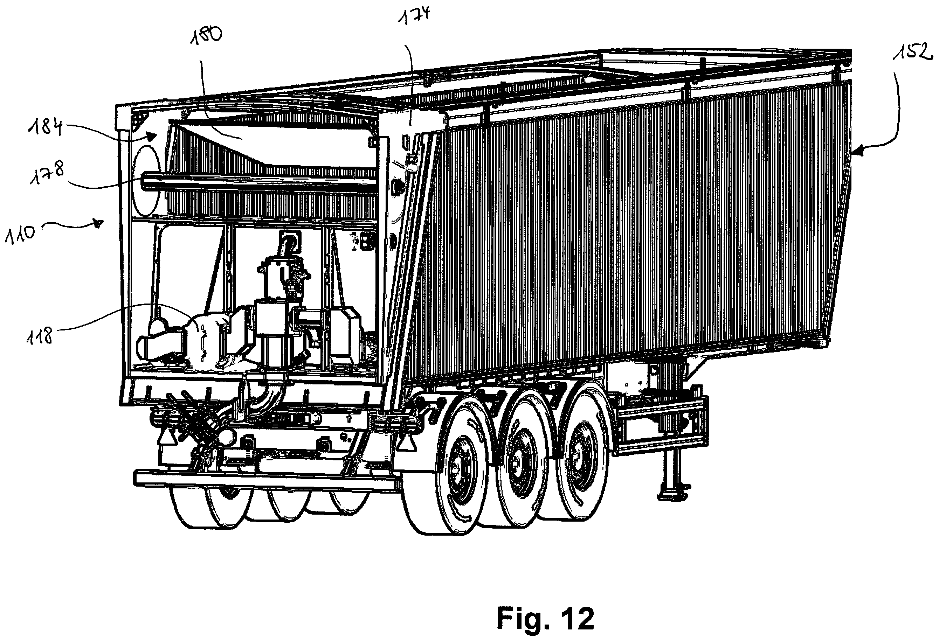

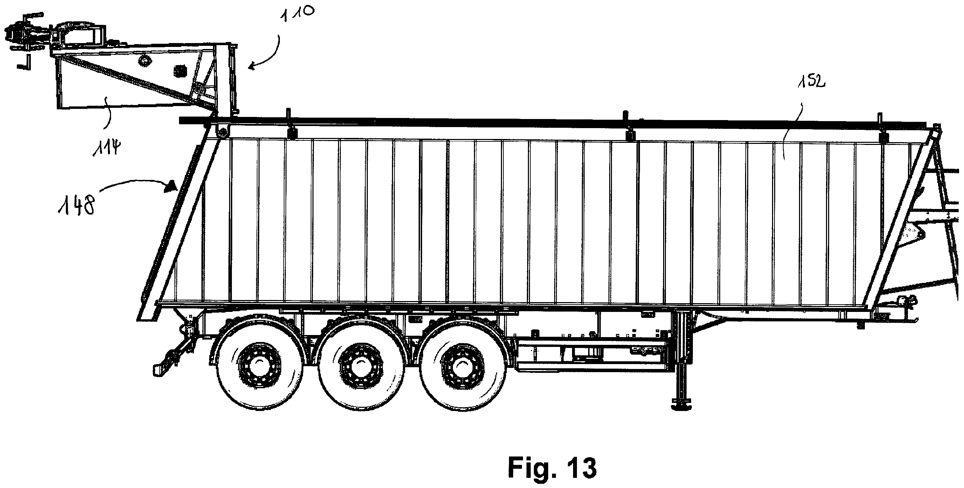

Die Figuren 9-16 zeigen eine alternative Ausführungsform des Adapters 110. Bei dieser Ausführungsform weist der Rahmen 112 des Adapters 110 seitliche Wandabschnitte 114, 116 auf, welche parallel zu den Seitenwänden der Mulde 152 verlaufen und deren hinteren Bereich in geschlossenem Zustand teilweise abdecken. Der Rahmen 112 weist ferner seitliche Schwenkarme 174, 176 auf, die schwenkbar am oberen Rand der Mulde 152 angelenkt sind. Diese seitlichen Schwenkarme 174, 176 bilden die Befestigungsmittel, mit denen der Adapter 110 an der Mulde 152 lösbar befestigt werden kann. Mittels der Schwenkarme 174, 176 kann der gesamte Adapter 110 aus der geschlossenen Position (siehe Figur 12) in die geöffnete Position (siehe Figur 13) verschwenkt werden. In der geöffneten Position ist die Hecköffnung 148 der Mulde 152 weitgehend offen. So kann die Mulde 152 des Muldenkippers auch mit daran angebrachtem Adapter 110 zum Transport von Schüttgut und zum Entleeren des Schüttguts durch die Hecköffnung 148, indem die Mulde 152 gekippt wird, verwendet werden.

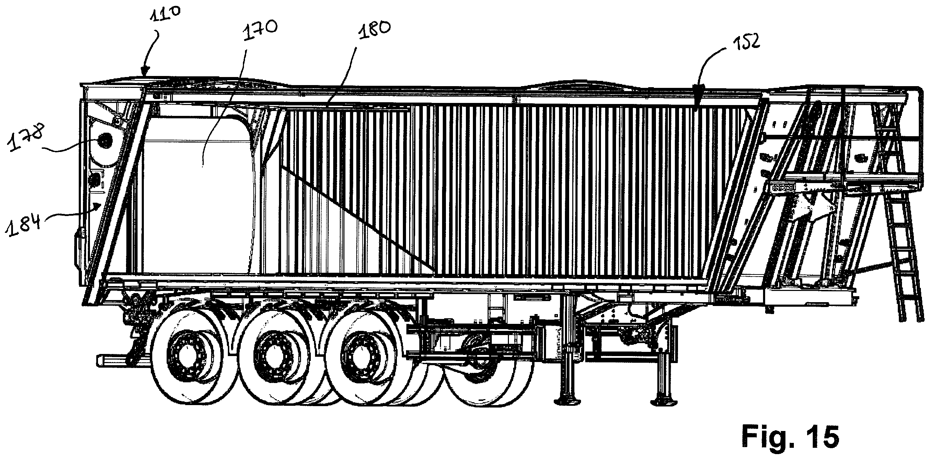

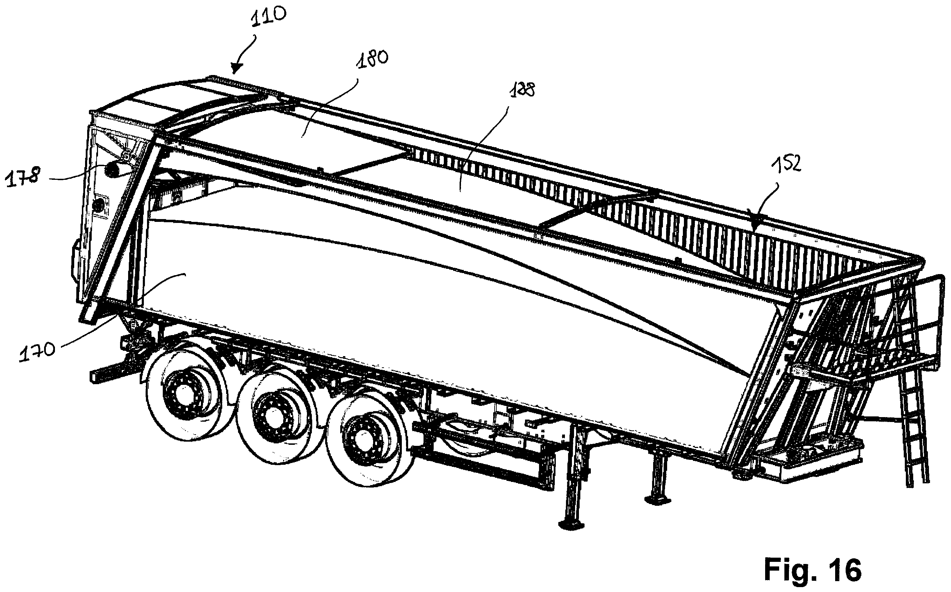

Im oberen Bereich des Adapters 110 befindet sich zwischen den zwei seitlichen Wandabschnitten 114 und 116 ein Aufnahmeraum 184, durch den sich in Querrichtung eine Wickelwelle 178 erstreckt. Die Wickelwelle 178 bildet eine Wickelvorrichtung zum Aufwickeln des flexiblen Behälters 170, der in den Figuren 15 und 16 dargestellt ist. Bei dieser Ausführungsform ist ferner eine Flüssigkeitspumpe 118 zu erkennen, die im vorliegenden Fall zwei Auslässe 120 und 121 aufweist, die zu zwei Flanschen 122, 123 führen und durch die je nach Förderrichtung der Flüssigkeitspumpe 118 Flüssigkeit in den Behälter 170 hinein oder aus dem Behälter 170 herausgepumpt wird. Je nach hydraulischer Schaltung können beide Auslässe 120 und 121 gleichzeitig zum Befüllen des Behälters 170 bzw. zum Entleeren des Behälters 170 verwendet werden. Hierdurch kann die Geschwindigkeit des Befüll- oder Entleerungsvorgangs gesteigert werden. Alternativ können die zwei Auslässe auch so geschaltet werden, dass die Flüssigkeitspumpe 118 die Flüssigkeit von dem ersten Auslass 120 zum zweiten Auslass 121 oder umgekehrt fördert. Dieser Flüssigkeitskreislauf erfüllt eine Spülfunktion, durch die der Behälter 170 gereinigt wird.

Die Flüssigkeitspumpe 118 weist ferner ein zentrales Befüll- und Entleerungsrohr 132 auf, das durch einen Absperrschieber 186 verschlossen werden kann. Das zentrale Befüll- und Entleerungsrohr 132 ist gekröpft und kann in verschiedene Stellungen verschwenkt werden, so dass die Befüllung und Entleerung von verschiedenen Seiten des Adapters 110 erfolgen kann. Eine zusätzliche Abstützung des Befüll- und Entleerungsrohr 132 an dem Adapter 110 ist nicht erforderlich. Insbesondere in den Figuren 9 und 12 ist ferner die Steuerung 124 zu erkennen. Überlaufrohr, Überlaufbehälter und Entlüftungsrohr sind auch bei dieser Ausführungsform entsprechend obiger Beschreibung zur ersten Ausführungsform vorgesehen.

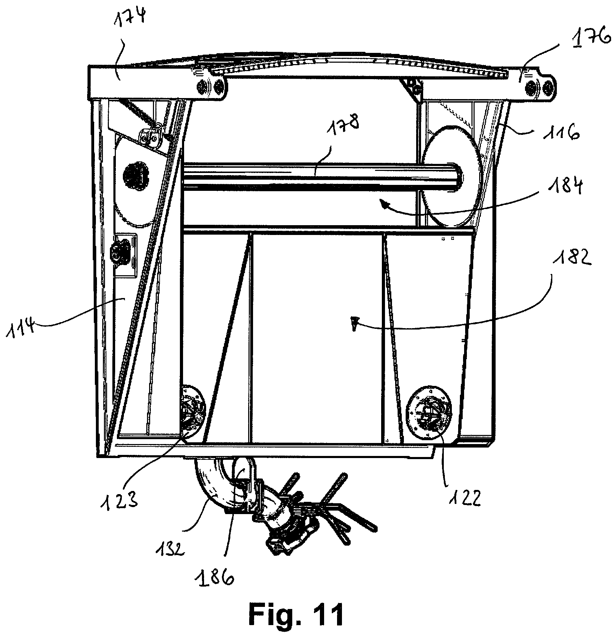

In der Figur 11 ist die Vorderseite des Adapters, d. h., die zum Muldeninnenraum des am hinteren Ende der Mulde 152 befestigten Adapters 110 gewandte Seite zu erkennen. Hier sind die zwei Flansche 122, 123 zu erkennen, durch welche Flüssigkeit in den flexiblen Behälter 170 (s. Fig. 16) eingefüllt und daraus entnommen wird. Ein festes Ende des flexiblen Behälters 170 ist an diesen Flanschen 122, 123 dicht befestigt, sodass die Flüssigkeit in den Behälter nur durch diese Flansche 122, 123 strömen kann. Ein bewegliches Ende des Behälters ist über einen Wickelband oder eine Wickelbahn an der Wickelwelle 178 befestigt. Die Wickelbahn oder das Wickelband bildet ein Zugelement, mit dem das bewegliche Ende des Behälters zur Wickelwelle 178 gezogen und dort aufgewickelt wird. Bei vollständig entleertem Behälter ist sowohl das Zugelement als auch der flexible Behälter 170 vollständig auf der Wickelwelle 178 aufgewickelt. Wenn Flüssigkeit in den flexiblen Behälter gepumpt wird, wickelt sich dieser von der Wickelvorrichtung 178 ab und legt sich über die gesamte Länge der Mulde 152 auf deren Boden. Das Zugelement legt sich dabei auf den Behälter. Bei weiterem Befüllen des Behälters 170 dehnt sich der Behälter in der Mulde 152 nach oben aus (vgl. Fig. 16).

Beim Entleeren des Behälters 170 durch Umkehren der Förderrichtung der Flüssigkeitspumpe 118 wird gleichzeitig die Wickelwelle 178 angetrieben, sodass zunächst das Zugelement 188 und anschließend der Behälter 170 auf der Wickelwelle 178 aufgewickelt wird (s. Fig. 15). Am Ende dieses Vorgangs ist die Mulde 152 wieder vollständig entleert und frei von dem Behälter, sodass sie für den Transport von Schüttgut verwendet werden kann.

Wie in der Figur 12 zu erkennen, ist an dem Aufnahmeraum 184 im oberen Bereich des Adapters 110 eine bewegliche Trennwand 180 angeordnet, welche die Öffnung für den Durchtritt des Behälters 170 und des Zugelements 188 (s. Fig. 16) freigibt und bei der Benutzung der Mulde 152 für den Transport von Schüttgut weitgehend verschlossen werden kann. Die Trennwand kann von der in Fig. 12 erkennbaren geöffneten Stellung in eine geschlossene Stellung verschwenkt werden, in der sie im Wesentlichen vertikal verläuft. Eine feste Deckwand 182 verläuft vertikal in dem Aufnahmeraum 184 und trägt die Flansche 122, 123.

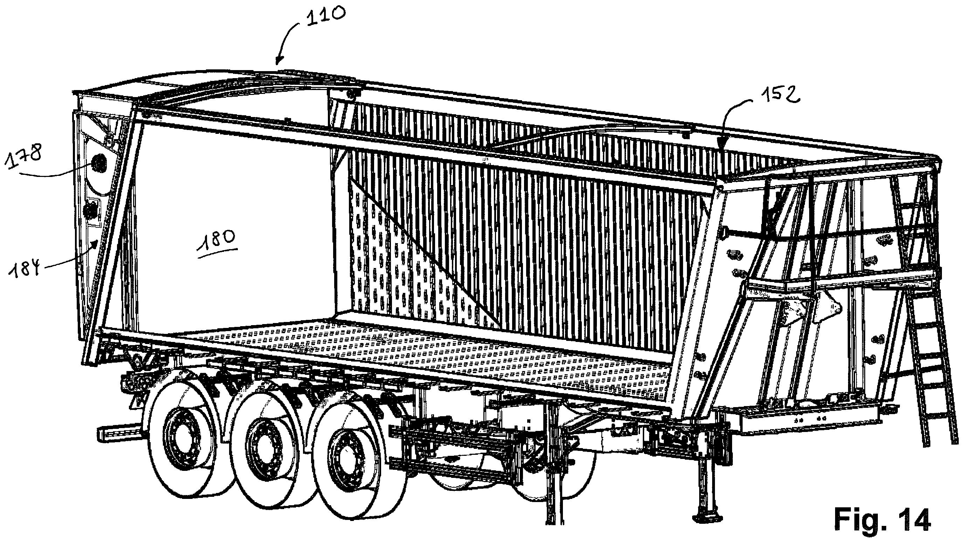

Die Figuren 14 bis 16 erläutern den Befüllvorgang und den Entleerungsvorgang.

In der Figur 14 ist eine Seitenansicht der Mulde 152 zu erkennen, bei der die dem Betrachter zugewandte Seitenwand der Mulde 152 weggeschnitten ist. In der Figur 14 ist der gesamte flexible Behälter zusammen mit dem Zugelement auf der Wickelwelle 178 aufgewickelt. Die bewegliche Wand 180 ist nach unten verschwenkt, sodass sie sich vertikal erstreckt und den Aufnahmeraum 184 in dem Adapter 110 verschließt. In dieser Konfiguration kann die Mulde 152 in herkömmlicher Weise für den Transport von Schüttgut verwendet werden.

Wenn mit der Mulde 152 Flüssigkeit transportiert werden soll, wird die Trennwand 180 hoch geschwenkt. Diese Stellung der Trennwand 180 ist in Figur 15 dargestellt. Die Trennwand 180 verläuft im Wesentlichen parallel zum oberen Rand der Mulde 152. Der auf der Wickelwelle 178 aufgewickelt flexible Behälter 170 kann ungehindert in den Innenraum der Mulde 152 eintreten. Beim Befüllen des Behälters 170 mittels Flüssigkeit, die durch die Pumpe 118 in den flexiblen Behälter 170 gepumpt wird, legt sich der flexible Behälter 170 über die gesamte Länge der Mulde 152. Dabei sollte die Bewegung der Wickelwelle 178 gebremst sein, damit der Behälter 170 nicht zu schnell von der Wickelwelle abgerollt wird und in der Mulde 152 keine Falten wirft.

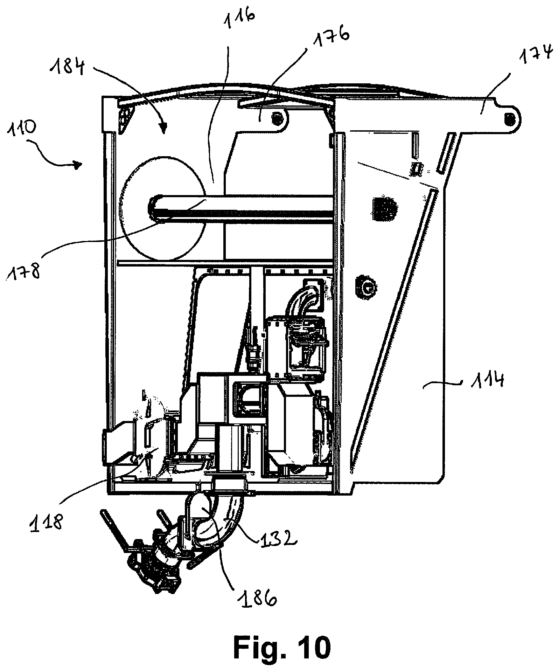

Der mit Flüssigkeit gefüllte Behälter ist in der Figur 16 dargestellt. Ferner ist in Figur 16 eine Textilbahn 188 zu erkennen, die sich von der Wickelwelle 178 bis zum vorderen, beweglichen Ende des flexiblen Behälters 170 erstreckt. Diese Textilbahn 188 bildet ein Zugelement. Das Zugelement 188 stellt sicher, dass beim Entleeren des Behälters 170 dieser auf der Wickelwelle 178 aufgewickelt werden kann. Durch das Aufwickeln zunächst des Zugelements (Textilbahn) 188 und anschließend des flexiblen Behälters 170 wird die Flüssigkeit aus dem Innenraum des flexiblen Behälters 170 herausgedrückt. Am Ende des Entleerungsvorgangs ist der gesamte flexible Behälter 170 mit dem Zugelement 188 vollständig auf der Wickelwelle 178 aufgerollt (siehe Figur 15) und die bewegliche Trennwand 180 kann wieder in die vertikale Stellung verschwenkt werden (s. Fig. 14). In diesem Zustand kann der Adapter 110 auch von der Mulde 152 getrennt werden und durch eine herkömmliche und leichtere Heckklappe ersetzt werden. Hierfür muss lediglich die schwenkbare Befestigung der Schwenkarme 174, 176 (s. Fig. 10 und 11) gelöst werden.

Durch das Entfernen des Adapters 110 wird das Gesamtgewicht des Fahrzeugs mit der Mulde 152 um etwa 800 kg reduziert. Dieses eingesparte Gewicht kann als zusätzliche Nutzlast genutzt werden. Die Umrüstung der Mulde 152 ist in kurzer Zeit, mit einem Zeitaufwand unter einer Stunde, zu bewerkstelligen.

### Bezugszeichenliste

- 10: Adapter
- 12: Rahmen
- 14a, 14b: Querstrebe
- 16a, 16b: vertikale Strebe
- 18: Flüssigkeitspumpe
- 20: Auslass
- 22: Flansch (zur Befestigung des flexiblen Behälters)
- 24: Steuerung
- 26: Überlaufrohr
- 28: Überlaufbehälter
- 30: Entlüftungsrohr
- 32a, 32b: linkes und rechtes Befüll- und Entleerungsrohr
- 34a, 34b: freies Ende
- 36a, 36b: Tragarm
- 38: Fremdkörperschutz
- 40a, 40b: Ventil
- 41a-d: Auflagestreben
- 42a-d: Haltestreben
- 44: Traggestell
- 46: Standfuß
- 48: Hecköffnung
- 50: Befestigungsmittel, Schraubbohrung
- 52: Mulde
- 54a, 54b: Flanschblech
- 58: Schraube
- 60: Bedienelement
- 62: Drucksensor
- 64: Überdruckventil
- 66: Zwischenrohr
- 68: Stapleraufnahme
- 70: flexibler Behälter
- 72: kreuzförmige Stützstrebe

- 110: Adapter
- 112: Rahmen
- 114: seitlicher Wandabschnitt
- 116: seitlicher Wandabschnitt
- 118: Flüssigkeitspumpe
- 120: Auslass
- 121: Auslass
- 122: Flansch
- 123: Flansch
- 124: Steuerung
- 132: Befüll- und Entleerungsrohr
- 148: Hecköffnung
- 152: Mulde
- 170: flexibler Behälter
- 174: Schwenkarm
- 176: Schwenkarm
- 178: Wickelwelle, Wickelvorrichtung
- 180: bewegliche Trennwand
- 170: flexibler Behälter
- 182: feste Deckwand
- 184: Aufnahmeraum
- 186: Absperrschieber
- 188: Textilbahn, Zugelement

## Patentansprüche

1. Adapter (10, 110) zum Umrüsten eines Fahrzeugs zum Transport von Schüttgut mit einer Mulde (52, 152) mit einer Hecköffnung (48, 148) in einem Transporter für Flüssigkeiten, mit
- Befestigungsmitteln (50; 174, 176) zur Befestigung des Adapters (10, 110) im Bereich der Hecköffnung (48, 148)
- einer Flüssigkeitspumpe (18, 118) mit mindestens einem Auslass (20; 120, 121), der mit einem flexiblen Behälter (70, 170) zur Aufnahme von gepumpter Flüssigkeit verbunden ist,
- wobei der flexible Behälter (70, 170) von einer Wickelvorrichtung (178) abwickelbar ist, und wobei ein festes Ende des flexiblen Behälters (170) am Auslass (120, 121) der Flüssigkeitspumpe (118) befestigt ist;
**dadurch gekennzeichnet, dass**
die Flüssigkeitspumpe (18, 118) an dem Adapter angeordnet ist,
- und ein vorderes, bewegliches Ende des flexiblen Behälters (170) ist an einem Zugelement (188) befestigt, welches durch die in einem Aufnahmeraum (184) am Adapter (10, 110) angeordnete Wickelvorrichtung (178) aufwickelbar ist,
- wobei beim Aufwickeln zunächst das Zugelement (188) und anschließend der flexible Behälter (170) aufwickelbar sind.

2. Adapter (10, 110) nach Anspruch 1, **dadurch gekennzeichnet, dass**:
- der Adapter (10, 110) einen Rahmen (12, 112) aufweist, an dem die Befestigungsmittel (50; 174, 176) und die Flüssigkeitspumpe (18, 118) befestigt sind;
- der Adapter (10) seitliche Schraubbohrungen (50) als Befestigungsmittel aufweist, die korrespondierend zu Schraubbohrungen in Flanschblechen (54a, 54b) einer Heckklappen-Aufnahme ausgebildet sind;
- der Adapter (110) um eine im oberen Bereich der Hecköffnung (148) quer verlaufende Schwenkachse schwenkbar befestigt ist, wobei die Befestigungsmittel vorzugsweise seitliche Schwenkarme (174, 176) umfassen.

3. Adapter (110) nach Anspruch 1 oder 2, **dadurch gekennzeichnet, dass** der Aufnahmeraum (184) ist mit einer beweglichen Trennwand (180) verschließbar;

4. Adapter (10) nach einem der vorstehenden Ansprüche, **gekennzeichnet durch** einen Tragarm (36a, 36b) zur Abstützung eines mit der Pumpe (18) verbundenen Befüll- und Entleerungsrohrs (32a, 32b).

5. Adapter (10) nach einem der vorstehenden Ansprüche, **gekennzeichnet durch** ein Überlaufrohr (26), das mit dem Innenraum des flexiblen Behälters (70) gekoppelt ist und zu einem Überlaufbehälter (28) führt.

6. Adapter (10) nach Anspruch 5, **gekennzeichnet durch** ein Überdruckventil (64), wobei das Überlaufrohr (26) über das Überdruckventil (64) mit dem Innenraum des flexiblen Behälters (70) gekoppelt ist.

7. Adapter (10) nach Anspruch 5 oder 6, **dadurch gekennzeichnet, dass** ein Entlüftungsrohr (30) mit dem Innenraum des Überlaufbehälters (28) gekoppelt ist.

8. Adapter (10) nach einem der vorstehenden Ansprüche, **dadurch gekennzeichnet, dass** er lösbar mit einem Traggestell (44) verbindbar ist, welches vorzugsweise mit Rädern ausgerüstet ist.

9. Adapter (10) nach einem der vorstehenden Ansprüche 2 bis 8, **dadurch gekennzeichnet, dass** der Rahmen (12) eine obere Querstrebe (14a) und eine untere Querstrebe (14b) aufweist, wobei zumindest an einer der Querstreben (14a, 14b) mindestens eine Haltestrebe (42a, 42b, 42c, 42d) befestigt ist, welche sich zumindest über einen Teil der Höhe des Rahmens (12) erstreckt.

10. Adapter (10, 110) nach einem der vorstehenden Ansprüche 2 bis 9,
**dadurch gekennzeichnet, dass** der Rahmen (12, 112) eine Abdeckung aufweist, welche zumindest einen größeren Teil der Hecköffnung (48, 148) verschließt.

11. Muldenkipper zum Transport von Flüssigkeiten mit einer Mulde (52, 152) mit einer Hecköffnung (48, 148), an der ein Adapter (10, 110) nach einem der vorstehenden Ansprüche befestigt ist.

## Claims

1. Adaptor (10, 110) for conversion of a vehicle for transporting bulk material, which has a skip (52, 152) with a rear opening (48, 148), into a transporter for liquids, having
- fastening means (50; 174, 176) for fastening the adaptor (10, 110) in the region of the rear opening (48, 148),
- a liquid pump (18, 118) having at least one outlet (20; 120, 121) which is connected to a flexible container (70, 170) for receiving pumped liquid,
- wherein the flexible container (70, 170) is able to be unwound by a winding apparatus (178), and wherein a fixed end of the flexible container (170) is fastened to the outlet (120, 121) of the liquid pump (118),
**characterized in that**
the liquid pump (18, 118) is arranged on the adaptor,
- and a front movable end of the flexible container (170) is fastened to a pulling element (188) which is able to be wound up by the winding apparatus (178), the latter being arranged in a receiving space (184) at the adaptor (10, 110),
- wherein, during the winding-up, firstly the pulling element (188) and then the flexible container (170) are able to be wound up.

2. Adaptor (10, 110) according to Claim 1, **characterized in that**
- the adaptor (10, 110) has a frame (12, 112) to which the fastening means (50; 174, 176) and the liquid pump (18, 118) are fastened;
- the adaptor (10) has, as fastening means, lateral threaded bores (50) which are formed so as to correspond to threaded bores in metal flange sheets (54a, 54b) of a tailgate receiving part;
- the adaptor (110) is fastened so as to be able to pivot about a pivot axis extending transversely in the upper region of the rear opening (148), wherein the fastening means preferably comprise lateral pivot arms (174, 176).

3. Adaptor (110) according to Claim 1 or 2, **characterized in that** the receiving space (184) is able to be closed off by a movable dividing wall (180).

4. Adaptor (10) according to one of the preceding claims, **characterized by** a support arm (36a, 36b) for supporting a filling and emptying tube (32a, 32b) connected to the pump (18).

5. Adaptor (10) according to one of the preceding claims, **characterized by** an overflow tube (26) which is coupled to the interior of the flexible container (70) and leads to an overflow container (28).

6. Adaptor (10) according to Claim 5, **characterized by** an overpressure valve (64), wherein the overflow tube (26) is coupled to the interior of the flexible container (70) via the overpressure valve (64).

7. Adaptor (10) according to Claim 5 or 6, **characterized in that** a venting tube (30) is coupled to the interior of the overflow container (28).

8. Adaptor (10) according to one of the preceding claims, **characterized in that** it is able to be connected detachably to a support frame (44), which is preferably equipped with wheels.

9. Adaptor (10) according to one of the preceding Claims 2 to 8, **characterized in that** the frame (12) has an upper transverse strut (14a) and a lower transverse strut (14b), wherein at least one holding strut (42a, 42b, 42c, 42d) is fastened at least to one of the transverse struts (14a, 14b) and extends at least over a part of the height of the frame (12).

10. Adaptor (10, 110) according to one of the preceding Claims 2 to 9, **characterized in that** the frame (12, 112) has a cover which closes off at least a relatively large part of the rear opening (48, 148).

11. Dumper for transporting liquids, having a skip (52, 152) with a rear opening (48, 148), to which skip an adaptor (10, 110) according to one of the preceding claims is fastened.

## Revendications

1. Adaptateur (10, 110) pour la conversion d'un véhicule pour le transport de produit en vrac comprenant une benne (52, 152) avec une ouverture arrière (48, 148) en un transporteur pour des liquides, comprenant :
- des moyens de fixations (50 ; 174, 176) pour la fixation de l'adaptateur (10, 110) dans la zone de l'ouverture arrière (48, 148),
- une pompe de liquide (18, 118) avec au moins une sortie (20 ; 120, 121), qui est reliée avec un contenant flexible (70, 170) pour la réception de liquide pompé,
- le contenant flexible (70, 170) pouvant être déroulé à partir d'un dispositif d'enroulement (178), et une extrémité solide du contenant flexible (170) étant fixée sur la sortie (120, 121) de la pompe de sortie (118) ;
**caractérisé en ce que** la pompe de liquide (18, 118) est agencée sur l'adaptateur,
- et une extrémité avant mobile du contenant flexible (170) est fixée sur un élément de traction (188), qui peut être enroulé par le dispositif d'enroulement (178) agencé dans une chambre de réception (184) sur l'adaptateur (10, 110),
- lors de l'enroulement, tout d'abord l'élément de traction (188) et ensuite le contenant flexible (170) pouvant être enroulés.

2. Adaptateur (10, 110) selon la revendication 1, **caractérisé en ce que** :
- l'adaptateur (10, 110) comprend un cadre (12, 112), sur lequel les moyens de fixation (50 ; 174, 176) et la pompe de liquide (18, 118) sont fixés ;
- l'adaptateur (10) comprend des taraudages latéraux (50) en tant que moyens de fixation, qui sont configurés de manière correspondante à des taraudages dans des tôles de bride (54a, 54b) d'une réception de hayon ;
- l'adaptateur (110) est fixé de manière pivotante autour d'un axe de pivotement s'étendant perpendiculairement dans la zone supérieure de l'ouverture arrière (148), les moyens de fixation comprenant de préférence des bras de pivotement latéraux (174, 176).

3. Adaptateur (110) selon la revendication 1 ou 2, **caractérisé en ce que** la chambre de réception (184) peut être fermée avec une paroi de séparation mobile (180) .

4. Adaptateur (10) selon l'une quelconque des revendications précédentes, **caractérisé par** un bras porteur (36a, 36b) pour le support d'un tube de remplissage et de vidage (32a, 32b) relié avec la pompe (18) .

5. Adaptateur (10) selon l'une quelconque des revendications précédentes, **caractérisé par** un tube de trop-plein (26), qui est couplé avec la chambre intérieure du contenant flexible (70) et conduit à un contenant de trop-plein (28).

6. Adaptateur (10) selon la revendication 5, **caractérisé par** une soupape de surpression (64), le tube de trop-plein (26) étant couplé par l'intermédiaire de la soupape de surpression (64) avec la chambre intérieure du contenant flexible (70).

7. Adaptateur (10) selon la revendication 5 ou 6, **caractérisé en ce qu'**un tube d'aération (30) est couplé avec la chambre intérieure du contenant de trop-plein (28) .

8. Adaptateur (10) selon l'une quelconque des revendications précédentes, **caractérisé en ce qu'**il peut être relié de manière amovible avec un châssis porteur (44), qui est de préférence équipé de roues.

9. Adaptateur (10) selon l'une quelconque des revendications 2 à 8 précédentes, **caractérisé en ce que** le cadre (12) comprend une entretoise transversale supérieure (14a) et une entretoise transversale inférieure (14b), au moins une entretoise de retenue (42a, 42b, 42c, 42d), qui s'étend au moins sur une partie de la hauteur du cadre (12), étant fixée sur au moins une des entretoises transversales (14a, 14b).

10. Adaptateur (10, 110) selon l'une quelconque des revendications 2 à 9 précédentes, **caractérisé en ce que** le cadre (12, 112) comprend un couvercle, qui ferme au moins une plus grande partie de l'ouverture arrière (48, 148).

11. Tombereau pour le transport de liquides comprenant une benne (52, 152) avec une ouverture arrière (48, 148), sur laquelle un adaptateur (10, 110) selon l'une quelconque des revendications précédentes est fixé.
